# EUROPEAN PATENT SPECIFICATION

(11) **EP 0 853 067 B1**
(45) Date of publication and mention of the grant of the patent: **17.05.2006**
(21) Application number: 97122973.7
(22) Date of filing: 30.12.1997
(51) Int. Cl.: C02F 3/08

(54) **Fixed biomass biological reactor comprising a hydrostatically running rotary contactor**
Bioreaktor mit fixierter Biomasse und einem hydrostatisch laufenden Rotationskontaktor
Réacteur biologique à biomasse fixée comprenant un contacteur animé hydrostatiquement

(30) Priority: 14.01.1997 IT MI970045
(43) Date of publication of application: 15.07.1998
(73) Proprietor: Geuna, Enrico, 20131 Milano (IT)
(72) Inventor: Geuna, Enrico, 20131 Milano (IT)
(74) Representative: Lecce, Giovanni

(56) References cited:
- EP-A- 0 014 453
- US-A- 3 886 074
- US-A- 4 160 736
- US-A- 4 268 385

## Description

The present invention relates to a fixed biomass biological reactor comprising a hydrostatically running rotary biological reactor.

In particular, the present invention relates to a fixed biomass biological reactor comprising a rotary contactor having a particular structural conformation which, associated to the positive buoyancy exercised by a gas, causes the rotation of said contactor, realising a high gas-liquid exchange coefficient, high yields and energy savings.

Biological reactors are apparatuses that comprise an open or closed tank containing the culture liquid, stirring systems, thermostating systems, air blowing systems and control systems. Such reactors are widely used in industrial microbiology for the production of chemical and pharmaceutical substances, as well as in the biological purification of domestic or industrial sewages.

Rotary biological contactors (RBC) are a particular class of reactors, usually mechanically activated. Said contactors are widely used in sewage purification.

The contactors of the known art comprise a substantially cylindrical structure, generally from plastic material, fixed on a horizontal axis central steel shaft. The contactor, driven by a ratio-motor, rotates around the horizontal axis in a tank gone through by the sewage to be purified, with an immersion of about 40% the active surface. In particular, contactors with diameters of 3.6 m have a rotation speed comprised between 1 and 2 r.p.m. Higher rotation speeds involve excessive energy consumptions, without providing at the same time any advantages in terms of purification yields.

Directly after the start, various micro-organisms colonise the surface of the contactor and proliferate until, in a short time, the whole surface is covered by a rather thick layer of biomass (biofilm).

During the rotation, the contactor brings a sewage film in touch with air, the film drips along the exposed surfaces and absorbs air oxygen.

By working in this way, the contactor carries out several functions: it provides a means for the growth of fixed biomass, allows the contact of the biomass with the sewage and the aeration of the same. The shearing forces exercised by the liquid on the biomass cause the detachment of at least a part of the latter. The mixing action keeps in suspension up to the outlet of the reaction tank the solids detached.

Most of the problems and drawbacks associated to the use of mechanically activated contactors in the aerobic purification of sewages are due to the proliferation of undesired microbial species, because of the lack of a running flexibility such as to allow the control of the latter. When an overload of polluting substance takes place, the ensuing high development of the biomass is mainly due to the inefficient anaerobic micro-organisms that form a consistent jelly mass that significantly reduces the transportation of molecular oxygen in the biofilm, preventing therefore the growth or aerobic micro-organisms. Besides, the anaerobic layer can also be counter-producing as it generates volatile acids which increase the Biological Demand of soluble Oxygen (OBD) on an already overloaded biomass.

In order to reduce said drawbacks, rotary contactors have been developed under which air is blown in. In the sixties, the US company Autotrol Co. developed such contactors based on the existing mechanically activated models. These are made up by a plurality of flat disks, alternating with corrugated disks, both types of disks being placed transversally along the rotation axle. Disk corrugations that form circle arcs concentric relatively to the rotation axle, contribute to increasing the available active surface, but at the same time, besides facilitating the penetration into the contactor of air blown in under the same, are also indifferent to the positive buoyancy that might induce the rotation of the same. For this reason, special cups have been tangetially fixed along the external perimeter of the contactor. Said cups, filling with blown in air, cause the buoyancy necessary to induce the rotation (see U.S. Patent no. 3,886,074). It should be stressed that said cups represent a very limited percentage, both as volume and as surface, of the contactor as a whole and, according to the same Autotrol, about 80% blown in air is trapped by the peripheral cups to impress the rotation, while the remaining 20% penetrates, in full or partly, into the inside of the contactor through channels radially oriented relatively to the rotation axle (Autrotrol Bulletin 1980 "State-of-the-art in RBC technology - the AERO - SURF process"). By such device, with respect to mechanically activated contactors, the increase in the running capacity of the system, the specific surface being equal, remains relatively modest, i.e. in the order of 8-9%, as the oxygenation of the biofilm takes place, in the same way as the mechanically activated contactors, essentially during the stage of emersion of the contactor. As mentioned, the increase in the rotation speed of the aforementioned aerated contactors does not lend the system substantial improvements, against the unacceptable increases in energy consumption.

It is an object of this invention to obviate the aforementioned drawbacks of rotary contactors of the known art.

More particularly, an object of this invention is to provide a rotary biological contactor wherein the aerobic metabolic activity takes place on 100% its surface instead of 60% surface at the most.

It is a further object of this invention to provide a rotary biological contactor that, thanks to its structural characteristics, allows to overcome the running limitations characteristic of existing contactors, including the air-activated ones, with consistent advantages from both the technical and the economic points of view.

The present invention allows to achieve these and still other objects - which will be plain thanks to the following description - by means of a rotary biological contactor as defined in claim 1 having a structure constituted for the most part by channels horizontally located along the longitudinal axis parallel to the rotation axle of the rotary contactor and supported by disks perpendicular to the rotation axle. Such channels are so located that they can either receive with continuity a positive buoyancy from the blown in air adequate to obtain the rotation of the whole structure or be entirely enveloped, whatever their position, by the air necessary to the aerobic metabolic activity, achieving in this way yields that are near the theoretical ones.

Even if the new rotary contactor were used in a closed room, partly or fully immersed in the liquid, for anaerobic transformations, the advantages achievable still remain, as the direct activity of gas bubbles on all the surface of the contactor involves a favourable trend of microbiological dynamics, thanks to the effectiveness of gas-liquid exchanges.

The new rotary biological contactor subject matter of the present invention can be conveniently applied in sewage purification.

However, such application is only a particular utilisation case, as the rotary biological contactor of the present invention can be applied in any field of industrial microbiology and indifferently in either aerobic or anaerobic microbiological processes.

The present invention will be better understood from the following detailed description, wherein reference is made to the figures of the attached drawings which represent a preferred embodiment, provided solely by way of non limiting example, of the biological reactor provided with a rotary contactor of the present invention, and wherein:

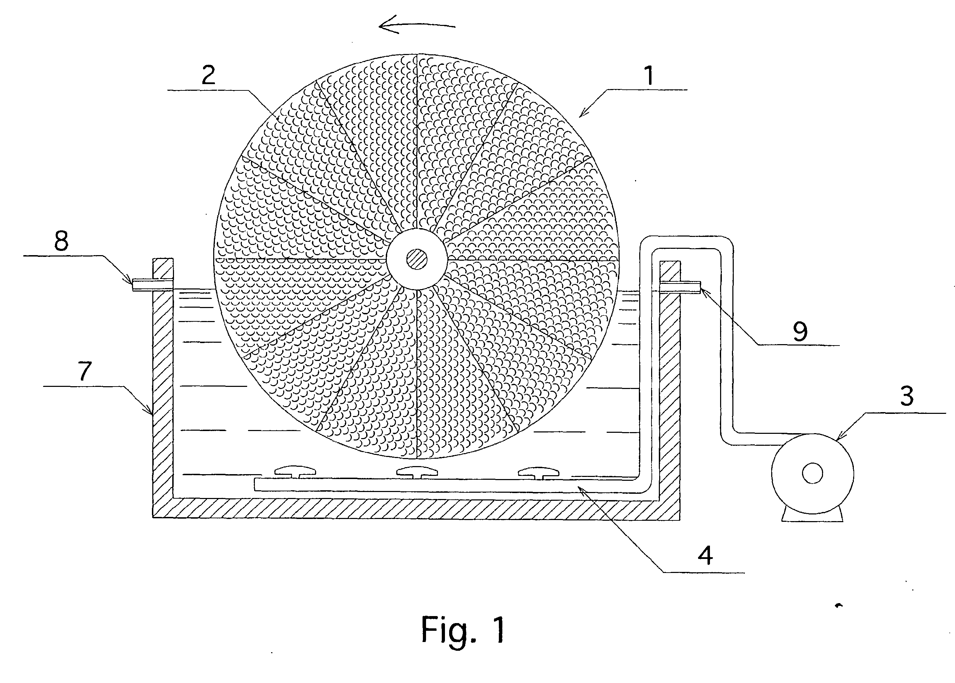

Figure 1 represents the schematic view of a cross-section of a biological reactor of the open type, with the rotary biological contactor partly immersed in the liquid;

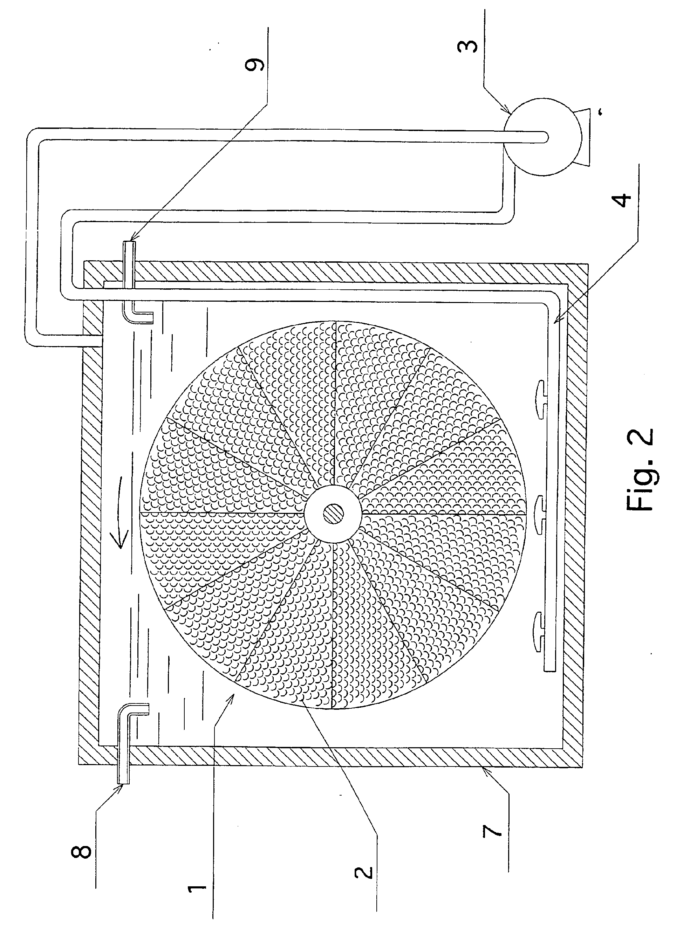

Figure 2 represents the schematic view of a cross-section of a biological reactor of the closed type, with the rotary biological contactor fully immersed in the liquid;

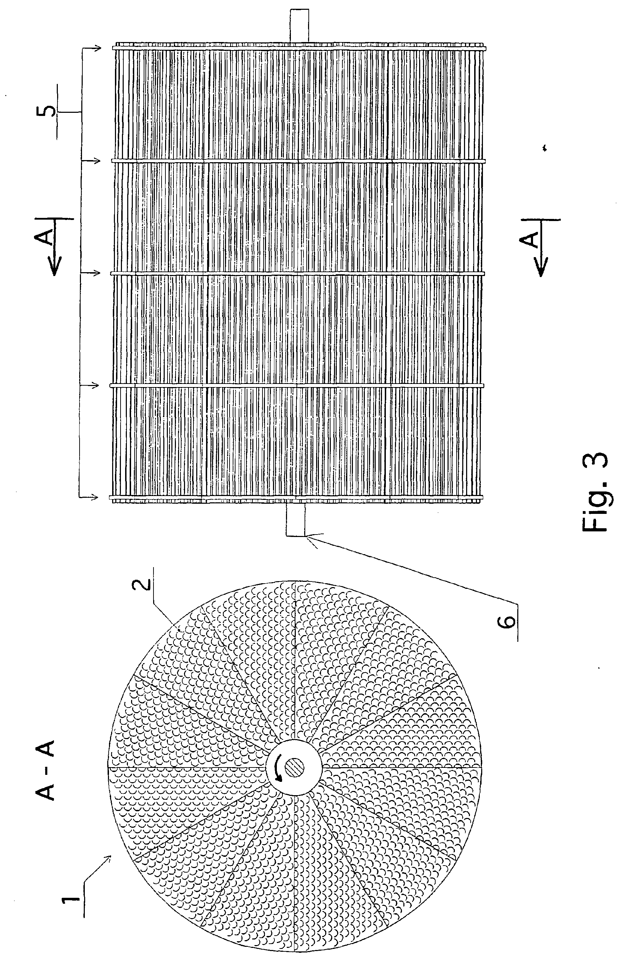

Figure 3 represents the front and side schematic views of the rotary biological contactor of the present invention; and
Figure 4 represents the front and side schematic views of some examples of channels that can be used for the construction of the rotary biological contactor of the present invention.

With reference to the figures, the fixed biomass biological reactor of the present invention comprises a tank (7), which may be open or closed and is provided with an inlet duct (8) and an outlet duct (9) for the reaction liquid, and a rotary biological contactor (1) having a horizontal rotation axle (6) contained in said tank (7) for a full or partial immersion in the reaction liquid. The horizontal axis rotary biological contactor (1) has a structure provided with cavities constituted by a plurality of channels (2), suitably spaces as indicated hereunder.

Air is blown in by means of a compressor (3) having special diffusers (4) located under the contactor (1).

The compressor can supply a pressure sufficient to overcome the head existing in the reaction tank as well as the load losses through diffusers (4).

To support themselves, channels (2) are located, parallel to the rotation axle (6) of contactor (1), on spacing disks, generally flat (5), located in their turn transversally and suitably spaced on the contactor axle, whereby the whole forms an integral structure.

Channels (2) are located with the transversal axis oriented perpendicularly with respect to the rotation axle (6) of contactor (1), and the longitudinal axis oriented longitudinally in a direction parallel to said rotation axle (6).

The size of the cross-section of each channel (2) may vary from at least a millimetre upwards, preferably, but not limitedly, from 5 and 50 mm. Spacings between channels (2) may be reduced to the geometric minimum, generally, but not limitedly, with values comprised between 2 and 30 mm.

The rotary biological contactor (1) may be either partly of fully submerged in tank (7) by the liquid ingoing through duct (8) and outgoing through duct (9).

As all the structure of the rotary biological contactor (1) of the present invention is in practice constituted by a plurality of channels (2) located parallel to the rotation axle of contactor (1), almost the totality of the blown in air can penetrate up to the inner parts of the structure, so as to provide, not only the rotational thrust, but also to promote an effective gas-liquid exchange throughout the mass of the contactor. As in this biological process gas-liquid exchanges are of basic importance, any increase in said exchanges is useful for the metabolic processes.

This running modality is particularly important in aerobic fermentation, as it frees the biological contactor from the need of keeping the rotation speed within the strict limits of the contactors of the known art: in fact, also in the submerged phase there exist conditions such as to preventing the onset of septic phenomena, and therefore also by an almost still contactor, the process can take place normally.

Thanks to the special arrangement of channels (2), whose concave side is oriented in a direction opposite to the direction of the rotation motion, air blowing can take place in the best conditions, also sweeping over all the geometric projections of the contactor on the horizontal plane, i.e. without preventing in the least the rotation of the contactor. When, because of the rotation, the cavities of the channels look upwards, said channels do not oppose the positive buoyancy, but are in any event swept over by the ascending gas current. Differently from the contactors of the known art, the air bubbles that penetrate into the contactor have in this way the possibility of sweeping over all the active biomass-covered surfaces, also by low air capacities, and therefore, besides the complete oxygenation of the biomass, the air bubbles can develop an effective removal action as well as a mixing action and an action of expulsion of the biomass detached from the support. With the proposed arrangement, the percentage of air that penetrates into the inside of the rotary biological contactor reaches much higher values with respect to conventional contactors, wherein most of the air is confined in the peripheral cups.

On the whole, the rotary biological contactor (1) of the present invention performs its function even when it is entirely submerged by sewage: this is a marked improvement of the running and efficiency of the system with respect to conventional contactors.

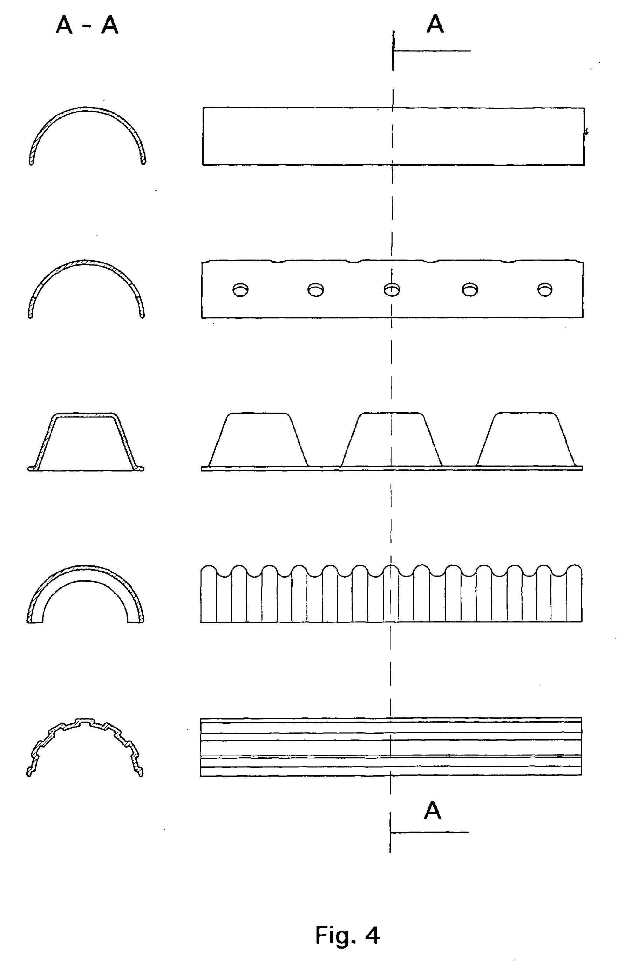

Channels (2) may be constituted by artefacts from any metal or plastic material, even a composite material. As shown in Figure 4, the channels may have any geometrical shape - for instance they may have a curved or trapezoid or an irregular section - and may be smooth, corrugated, drilled, and have undulations, crownings and curves, both in the longitudinal and the transversal direction. Corrugations may be of any shape and size, both in the longitudinal and the transversal direction, and also be present on both faces. The corrugation of channels allows to have at disposal a greater surface for the development of the biomass, and to increase gas-liquid exchanges. In this way, the resulting contactor has a specific surface not smaller than 100 m²/m³.

The realisation of the structure as a whole may be obtained with any technique, both by assembly of the individual parts and by assembly of prefabricated units with moulding techniques.

So, for instance, the contactor can be realised by fixing on the rotation horizontal axis (6) a set of spacing disks (5), transversally arranged relatively to said horizontal axis, said spacing disks being provided with apertures through which the channels are housed with the concave part oriented in a direction opposite to the rotation direction; the whole forming a horizontal cylindrical structure.

As an alternative, the rotary contactor can be realised by fixing radially on the horizontal rotation axle (6) a plurality of prefabricated elements shaped as segments concentric relatively to said horizontal axis whereon channels (2) are fixed that are parallel to the rotation axles and oriented in a direction contrary to the rotation direction, the whole involving an integrated horizontal cylindrical structure.

The rotary biological contactor may also be obtained with the simultaneous use of channels having a different geometry, in order to create particular subdivisions of the gas flow blown in into the inside of the contactor.

In the applications in aerobic conditions, the reaction tank will be of the open type with air blowing, while in the applications in anaerobic conditions the tank is of the closed type and the gases blown in are substantially oxygen-free. There may be used, for instance, nitrogen, such as the one released during the denitrating process.

Generally, it must be stressed that the use of the rotary biological contactor of the present invention allows to reduce the specific surfaces necessary to obtain equivalent performances, hence lower investment costs, both relatively to the present air-activated contactors and still more the present mechanically activated contactors.

Besides, thanks to the efficient utilisation of blown in gas, savings are obtained in the energy consumption necessary for the running of the contactor.

Although the invention has been described in conjunction with a specific embodiment offered for illustrative purposes only, it is evident that many alternatives and variations will be apparent to those skilled in the art in the light of the foregoing description.

Accordingly, the invention is intended to embrace all of the alternatives and variations that fall within the scope of the appended claims.

## Claims

1. A fixed biomass biological reactor, comprising:
- a tank (7) either open or closed, having an inlet duct (8) and an outlet duct (9) for a reaction liquid;
- a rotary biological contactor (1) having a horizontal rotation axle (6) and located in said tank (7);
- a plurality of gas diffusers (4) placed under the rotary biological contactor (1);
- a gas compressor (3) connected to said diffusers (4);
- a plurality of parallel spacing disks (5) spaced and fixed along the rotation axle (6) transversally relatively to said axle; and
- a plurality of channels (2) located on the spacing disks (5), each channel being arranged on the spacing disks (5) with the transversal axis orientated perpendicularly with respect to the rotation axle, the longitudinal axis orientated in a direction parallel to the rotation axle and having a concave side;
**characterised in that** the plurality of channels (2) are located on all the surface of the spacing disks (5), arranged with the concave side orientated in a direction opposite to the rotation direction of the contactor (1), and form with the spacing disks (5) the rotary biological contactor (1) having a structure provided with cavities.

2. The fixed biomass biological reactor according to claim 1, **characterised in that** the spacing disks (5) are provided with apertures and the channels (2) are housed in said apertures.

3. The fixed biomass biological reactor according to claim 1 or 2, **characterised in that** the rotary biological contactor (1) comprises a plurality of segment-shaped prefabricated elements, radially fixed on the horizontal axis (6) and concentric relatively to said horizontal axis (6); the plurality of channels (2) being fixed to said prefabricate elements.

4. The fixed biomass biological reactor according to anyone of the preceding claims, **characterised in that** the channels (2) are made of metal, plastic or composite material.

5. The fixed biomass biological reactor according to anyone of the preceding claims, **characterised in that** the channels (2) have a curved or trapezoidal cross-section.

6. The fixed biomass biological reactor according to anyone of the preceding claims, **characterised in that** the channels (2) are corrugated.

7. The fixed biomass biological reactor according to anyone of the preceding claims from 1 to 5, **characterised in that** the channels (2) are drilled.

8. The fixed biomass biological reactor according to anyone of the preceding claims, **characterised in that** the channels (2) have undulations in the longitudinal and/or transversal direction(s).

9. The fixed biomass biological reactor according to anyone of the preceding claims, **characterised in that** the channels (2) have a corrugated surface and the corrugations are present in the longitudinal and the transversal directions, on either one or both faces.

10. The fixed biomass biological reactor according to anyone of the preceding claims, **characterised in that** the channels (2) have different geometrical shapes to each other.

11. The fixed biomass biological reactor according to anyone of the preceding claims, **characterised in that** the contactor (1) is partially immersed in the reaction liquid.

12. The fixed biomass biological reactor according to anyone of the preceding claims from 1 to 10, **characterised in that** the contactor (1) is fully immersed in the reaction liquid.

## Patentansprüche

1. Biologischer Reaktor für Festbiomasse umfassend:
- einen Behälter (7), der entweder offen oder geschlossen ist, und der eine Einlassleitung (8) und eine Auslassleitung (9) für eine Reaktionsflüssigkeit aufweist;
- ein biologisches Drehkontaktelement (1), das eine waagerechte Rotationsachse (6) aufweist, und das in dem Behälter (7) untergebracht ist;
- eine Anzahl von Gasdiffusoren (4), die unter dem biologischen Drehkontaktelement (1) untergebracht ist;
- einen Gasverdichter (3), der mit den Diffusoren (4) verbunden ist;
- eine Anzahl von parallel angeordneten Abstandsscheiben (5), die längs der Rotationsachse (6) beabstandet und quer zur Achse befestigt ist; und
- eine Anzahl von Kanälen (2), die an den Abstandsscheiben (5) angeordnet ist, wobei jeder Kanal mit der Querachse senkrecht zur Rotationsachse an den Abstandsscheiben (5) angeordnet ist, und wobei die Längsachse in einer Richtung parallel zur Rotationsachse ausgerichtet ist und eine konkave Seite aufweist;
**dadurch gekennzeichnet, dass**
die Anzahl von Kanälen (2) auf der ganzen Fläche der Abstandsscheiben (5) untergebracht ist, dass sie mit der konkaven Seite in einer zur Rotationsrichtung des Kontaktelements (1) gegenüberliegenden Richtung angeordnet ist, und dass sie mit den Abstandsscheiben (5) das biologische Drehkontaktelement (1) bildet, das eine mit Hohlräumen versehene Struktur aufweist.

2. Biologischer Reaktor für Festbiomasse nach Anspruch 1, **dadurch gekennzeichnet, dass** die Abstandsscheiben (5) mit Öffnungen versehen und die Kanäle (2) in den Öffnungen untergebracht sind.

3. Biologischer Reaktor für Festbiomasse nach Anspruch 1 oder 2, **dadurch gekennzeichnet, dass** das biologische Drehkontaktelement (1) eine Anzahl von segmentförmigen vorgefertigten Elementen umfasst, die an der waagerechten Achse (6) und konzentrisch zur waagerechten Achse (6) radial befestigt ist, wobei die Anzahl von Kanälen (2) an den vorgefertigten Elementen befestigt ist.

4. Biologischer Reaktor für Festbiomasse nach einem der vorherstehenden Ansprüche, **dadurch gekennzeichnet, dass** die Kanäle (2) aus Metall, Kunststoff oder einem Verbundwerkstoff gefertigt sind.

5. Biologischer Reaktor für Festbiomasse nach einem der vorherstehenden Ansprüche, **dadurch gekennzeichnet, dass** die Kanäle (2) einen bogenförmigen oder trapezförmigen Querschnitt aufweisen.

6. Biologischer Reaktor für Festbiomasse nach einem der vorherstehenden Ansprüche, **dadurch gekennzeichnet, dass** die Kanäle (2) gewellt sind.

7. Biologischer Reaktor für Festbiomasse nach einem der Ansprüche 1 bis 5, **dadurch gekennzeichnet, dass** die Kanäle (2) gebohrt sind.

8. Biologischer Reaktor für Festbiomasse nach einem der vorherstehenden Ansprüche, **dadurch gekennzeichnet, dass** die Kanäle (2) Welligkeiten in der Längsrichtung und/oder in der Querrichtung aufweisen.

9. Biologischer Reaktor für Festbiomasse nach einem der vorherstehenden Ansprüche, **dadurch gekennzeichnet, dass** die Kanäle (2) eine gewellte Fläche aufweisen, und dass die Rippen in der Längs- und in der Querrichtung entweder an einer oder an beiden Flächen vorhanden sind.

10. Biologischer Reaktor für Festbiomasse nach einem der vorherstehenden Ansprüche, **dadurch gekennzeichnet, dass** die Kanäle (2) verschiedenartige geometrische Formen aufweisen.

11. Biologischer Reaktor für Festbiomasse nach einem der vorherstehenden Ansprüche, **dadurch gekennzeichnet, dass** das Kontaktelement (1) teilweise in der Reaktionsflüssigkeit eingetaucht ist.

12. Biologischer Reaktor für Festbiomasse nach einem der Ansprüche 1 bis 10, **dadurch gekennzeichnet, dass** das Kontaktelement (1) in der Reaktionsflüssigkeit voll eingetaucht ist.

## Revendications

1. Réacteur biologique à biomasse fixe, comprenant :
- un réservoir (7) ouvert ou fermé, comportant un conduit d'entrée (8) et un conduit de sortie (9) pour un liquide réactionnel ;
- un contacteur biologique rotatif (1) présentant un axe de rotation horizontal (6) et situé dans ledit réservoir (7) ;
- une pluralité de diffuseurs de gaz (4) placés sous le contacteur biologique rotatif (1) ;
- un compresseur de gaz (3) relié auxdits diffuseurs (4) ;
- une pluralité de disques espaceurs parallèles (5) espacés et fixés le long de l'axe de rotation (6) transversalement audit axe ;
- et une pluralité de canaux (2) situés sur les disques espaceurs (5), chaque canal étant disposé sur les disques espaceurs (5) avec son axe transversal orienté perpendiculairement par rapport à l'axe de rotation (6), son axe longitudinal orienté dans une direction parallèle à l'axe de rotation (6), et présentant un côté concave,
**caractérisé en ce que** la pluralité de canaux (2) sont situés sur toute la surface des disques espaceurs (5), disposés avec le côté concave orienté dans une direction opposée à la direction de rotation du contacteur (1), et ils forment avec les disques espaceurs (5) le contacteur biologique rotatif (1) ayant une structure munie de cavités.

2. Réacteur biologique à biomasse fixe selon la revendication 1, **caractérisé en ce que** les disques espaceurs (5) sont munis d'ouvertures et les canaux (2) sont logés dans lesdites ouvertures.

3. Réacteur biologique à biomasse fixe selon la revendication 1 ou 2, **caractérisé en ce que** le contacteur biologique rotatif (1) comprend une pluralité d'éléments préfabriqués en forme de segments, fixés radialement sur l'axe horizontal (6) et concentriques par rapport audit axe horizontal (6), la pluralité de canaux (2) étant fixée auxdits éléments préfabriqués.

4. Réacteur biologique à biomasse fixe selon l'une quelconque des revendications précédentes, **caractérisé en ce que** les canaux (2) sont constitués en métal, plastique ou matériau composite.

5. Réacteur biologique à biomasse fixe selon l'une quelconque des revendications précédentes, **caractérisé en ce que** les canaux (2) présentent une section transversale courbée ou trapézoïdale.

6. Réacteur biologique à biomasse fixe selon l'une quelconque des revendications précédentes, **caractérisé en ce que** les canaux (2) sont plissés.

7. Réacteur biologique à biomasse fixe selon l'une quelconque des revendications 1 à 5 , **caractérisé en ce que** les canaux (2) sont percés.

8. Réacteur biologique à biomasse fixe selon l'une quelconque des revendications précédentes, **caractérisé en ce que** les canaux (2) présentent des ondulations dans la direction longitudinale et/ou transversale.

9. Réacteur biologique à biomasse fixe selon l'une quelconque des revendications précédentes, **caractérisé en ce que** les canaux (2) présentent un surface plissée et les plissements sont présents dans les directions longitudinale et transversale, sur l'une des faces ou sur les deux.

10. Réacteur biologique à biomasse fixe selon l'une quelconque des revendications précédentes, **caractérisé en ce que** les canaux (2) présentent des formes géométriques différentes les uns par rapport aux autres.

11. Réacteur biologique à biomasse fixe selon l'une quelconque des revendications précédentes, **caractérisé en ce que** le contacteur (1) est en partie immergé dans le liquide réactionnel.

12. Réacteur biologique à biomasse fixe selon l'une quelconque des revendications 1 à 10, **caractérisé en ce que** le contacteur (1) est entièrement immergé dans le liquide réactionnel.
